# EUROPEAN PATENT APPLICATION

(11) **EP 2 660 911 A1**
(43) Date of publication of application: **06.11.2013**
(21) Application number: 11852974.2
(22) Date of filing: 27.12.2011
(51) Int. Cl.: H01M 8/04, H01M 8/06, H01M 8/10, H01M 8/12

(54) **FUEL CELL SYSTEM**

(30) Priority: 28.12.2010 JP 2010292702
(71) Applicant: JX Nippon Oil & Energy Corporation, Chiyoda-ku Tokyo 100-8162 (JP)
(72) Inventor: KANEKO Keisuke, Tokyo 100-8162 (JP); IBUKA Takeshi, Tokyo 100-8162 (JP)
(74) Representative: Grünecker, Kinkeldey, Stockmair & Schwanhäusser
(86) International application number: PCT/JP2011/080265
(87) International publication number: WO 2012/091034

(57) **Abstract**

This fuel cell system (1) monitors the temperature of an off-gas combusting unit (6) detected by a combustor temperature detecting unit (101) in a constant output operation state such as a rated operation state where a sweeping current of a cell stack (5) becomes constant, rather than directly measuring the fuel property, and controls the flow rate of the cathode gas so that the temperature of the off-gas combusting unit (6) reaches a target temperature. Moreover, the fuel cell system (1) determines the fuel property based on the variation of the flow rate of the cathode gas changed until the temperature of the off-gas combusting unit (6) reaches the target temperature and the temperature of the cathode gas. Thus, it is possible to simplify the configuration required for determining whether the fuel property has changed or not as compared to a conventional method of measuring a plurality of factors of the fuel property.

## Description

### Technical Field

The present invention relates to a fuel cell system.

### Background Art

A conventional fuel cell system is constructed such that the properties of fuel supplied to a cell stack are constant. Thus, when the fuel cell system is installed in such an environment that the fuel properties vary, deterioration of heat balance in the system or deterioration of the cell stack may progress. To solve such a problem, in a fuel cell system disclosed in Patent Literature 1, for example, measurement means for measuring a composition of fuel is provided, and a control parameter is set according to the measured composition.

### Citation List

### Patent Literature

Patent Literature 1: Japanese Patent Application Laid-open No. 2006-49056

However, the conventional measurement means described above requires a complex configuration, which may make the configuration of the fuel cell system complex.

### Summary of Invention

### Technical Problem

The present invention has been made to solve the above-described problems, and an object of the present invention is to provide a fuel cell system capable of detecting a change in the properties of the fuel with a simple configuration.

### Solution to Problem

In order to solve the above problem, according to an aspect of the present invention, there is provided a fuel cell system including: a hydrogen generating unit that generates hydrogen-containing gas using hydrogen-containing fuel; a cell stack that performs power generation using the hydrogen-containing gas; a supply unit that supplies cathode gas to the cell stack; a combustor that combusts off-gas supplied from the cell stack; a combustor temperature detecting unit that detects a temperature of the combustor; a flow rate detecting unit that detects a flow rate of the cathode gas; a cathode gas temperature detecting unit that detects a temperature of the cathode gas; an operation state determining unit that determines whether the fuel cell system is in a constant output operation state; a target temperature acquiring unit that acquires a target temperature of the combustor for the flow rate of the cathode gas detected by the flow rate detecting unit and the temperature of the cathode gas detected by the cathode gas temperature detecting unit, when the operation state determining unit determines that the fuel cell system is in the constant output operation state; a flow rate control unit that monitors the temperature detected by the combustor temperature detecting unit and controls the flow rate of the cathode gas so that the temperature of the combustor reaches the target temperature; and a property determining unit that determines a property of the fuel based on a variation of the flow rate of the cathode gas changed by the flow rate control unit and the temperature of the cathode gas detected by the cathode gas temperature detecting unit.

This fuel cell system monitors the temperature of the combustor detected by the combustor temperature detecting unit in a constant output operation state such as a rated operation state, rather than directly measuring the fuel property, and controls the flow rate of the cathode gas so that the temperature of the combustor reaches the target temperature. Moreover, the fuel property is determined based on the variation of the flow rate of the cathode gas changed until the temperature of the combustor reaches the target temperature and the temperature of the cathode gas detected by the cathode gas temperature detecting unit. Thus, it is possible to simplify the configuration required for determining whether the fuel property has changed or not as compared to a conventional method of measuring a plurality of factors of the fuel property.

According to another aspect of the present invention, there is provided a fuel cell system including: a hydrogen generating unit that generates hydrogen-containing gas using hydrogen-containing fuel; a cell stack that performs power generation using the hydrogen-containing gas; a supply unit that supplies cathode gas to the cell stack; a combustor that combusts off-gas supplied from the cell stack; a generator temperature detecting unit that detects a temperature of a generator that includes the hydrogen generating unit, the cell stack, and the combustor; a flow rate detecting unit that detects a flow rate of the cathode gas; a cathode gas temperature detecting unit that detects a temperature of the cathode gas; an operation state determining unit that determines whether the fuel cell system is in a constant output operation state; a target temperature acquiring unit that acquires a target temperature of the generator for the flow rate of the cathode gas detected by the flow rate detecting unit and the temperature of the cathode gas detected by the cathode gas temperature detecting unit, when the operation state determining unit determines that the fuel cell system is in the constant output operation state; a flow rate control unit that monitors the temperature detected by the generator temperature detecting unit and controls the flow rate of the cathode gas so that the temperature of the generator reaches the target temperature; and a property determining unit that determines a property of the fuel based on a variation of the flow rate of the cathode gas changed by the flow rate control unit and the temperature of the cathode gas detected by the cathode gas temperature detecting unit.

This fuel cell system monitors the temperature of the generator detected by the generator temperature detecting unit in a constant output operation state such as a rated operation state where the sweeping current of the cell stack is constant, rather than directly measuring the fuel property, and controls the flow rate of the cathode gas so that the temperature of the generator reaches the target temperature. Moreover, the fuel property is determined based on the variation of the flow rate of the cathode gas changed until the temperature of the generator reaches the target temperature and the temperature of the cathode gas detected by the cathode gas temperature detecting unit. Thus, it is possible to simplify the configuration required for determining whether the fuel property has changed or not as compared to a conventional method of measuring a plurality of factors of the fuel property.

According to a still another aspect of the present invention, there is provided a fuel cell system including: a hydrogen generating unit that generates hydrogen-containing gas using hydrogen-containing fuel; a cell stack that performs power generation using the hydrogen-containing gas; a supply unit that supplies cathode gas to the cell stack; a combustor that combusts off-gas supplied from the cell stack; a cell stack temperature detecting unit that detects a temperature of the cell stack; a flow rate detecting unit that detects a flow rate of the cathode gas; a cathode gas temperature detecting unit that detects a temperature of the cathode gas; an operation state determining unit that determines whether the fuel cell system is in a constant output operation state; a target temperature acquiring unit that acquires a target temperature of the cell stack for the flow rate of the cathode gas detected by the flow rate detecting unit, when the operation state determining unit determines that the fuel cell system is in the constant output operation state; a flow rate control unit that monitors the temperature detected by the cell stack temperature detecting unit and controls the flow rate of the cathode gas so that the temperature of the cell stack reaches the target temperature; and a property determining unit that determines a property of the fuel based on a variation of the flow rate of the cathode gas changed by the flow rate control unit and the temperature of the cathode gas detected by the cathode gas temperature detecting unit.

This fuel cell system monitors the temperature of the cell stack detected by the cell stack temperature detecting unit in a constant output operation state such as a rated operation state, rather than directly measuring the fuel property, and controls the flow rate of the cathode gas so that the temperature of the cell stack reaches the target temperature. Moreover, the fuel property is determined based on the variation of the flow rate of the cathode gas changed until the temperature of the cell stack reaches the target temperature and the temperature of the cathode gas detected by the cathode gas temperature detecting unit. Thus, it is possible to simplify the configuration required for determining whether the fuel property has changed or not as compared to a conventional method of measuring a plurality of factors of the fuel property.

### Advantageous Effects of Invention

According to the fuel cell system, it is possible to detect a change in the properties of fuel with a simple configuration.

### Brief Description of Drawings

Fig. 1 is a diagram showing an embodiment of a fuel cell system according to the present invention.
Fig. 2 is a diagram showing functional constituent components of a control unit.
Fig. 3 is a diagram showing how a target temperature acquiring unit acquires a target temperature.
Fig. 4 is a diagram showing how a flow rate control unit controls cathode gas.
Fig. 5 is a diagram showing how a property determining unit determines properties of fuel.
Fig. 6 is a flowchart showing an example of a diagnostic process of a control unit.

### Description of Embodiments

Hereinafter, a preferred embodiment of a fuel cell system according to the present invention will be described in detail with reference to the drawings. In the drawings, the same or corresponding portions will be denoted by the same reference numerals and redundant description thereof will not be provided.

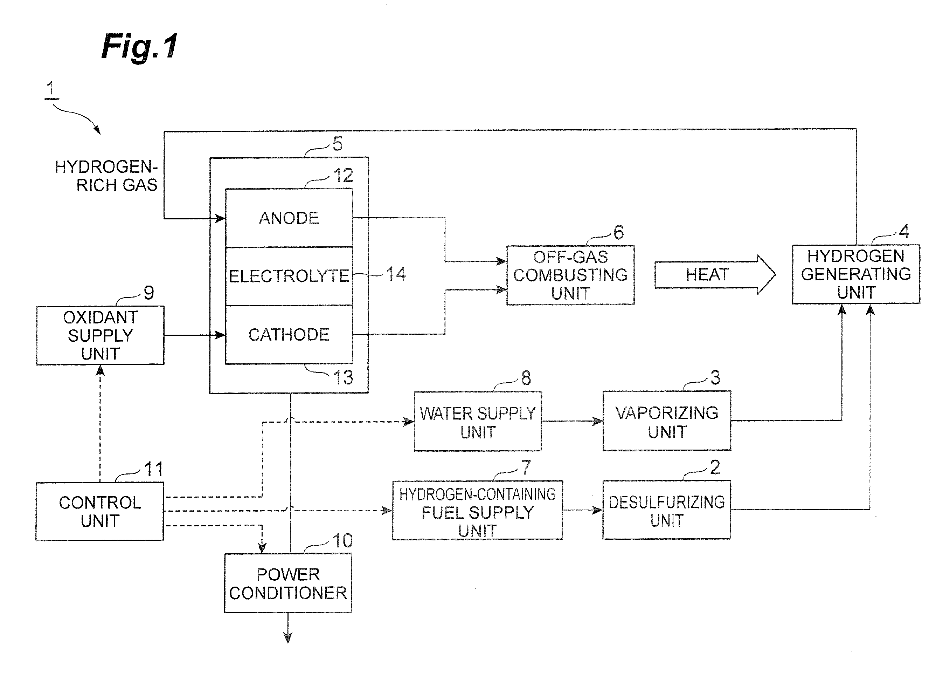

As shown in Fig. 1, a fuel cell system 1 includes a desulfurizing unit 2, a vaporizing unit 3, a hydrogen generating unit 4, a cell stack 5, an off-gas combusting unit 6, a hydrogen-containing fuel supply unit 7, a water supply unit 8, an oxidant supply unit 9, a power conditioner 10, and a control unit 11. In the fuel cell system 1, the cell stack 5 performs power generation using hydrogen-containing fuel and oxidant. The type of the cell stack 5 in the fuel cell system 1 is not particularly limited, and for example, a polymer electrolyte fuel cell (PEFC), a solid oxide fuel cell (SOFC), a phosphoric acid fuel cell (PAFC), a molten carbonate fuel cell (MCFC), and other types of fuel cells can be used. The constituent components shown in Fig. 1 may be appropriately omitted depending on the type of the cell stack 5, the type of hydrogen-containing fuel, a reforming method, and the like.

As the hydrogen-containing fuel, hydrocarbon-based fuel is used, for example. As the hydrocarbon-based fuel, compounds containing carbon and hydrogen (the compounds may contain other elements such as oxygen) in their molecules and mixtures thereof are used. Examples of the hydrocarbon-based fuel include hydrocarbons, alcohols, ethers, and biofuel, and hydrocarbon-based fuels that originate from existing fossil fuels such as petroleum or coal, that originate from synthetic fuels such as synthetic gas, and that originate from biomass can be appropriately used. Specifically, examples of hydrocarbons include methane, ethane, propane, butane, natural gas, liquefied petroleum gas (LPG), city gas, town gas, gasoline, naphtha, kerosene, and gas oil. Examples of alcohols include methanol and ethanol. Examples of ethers include dimethyl ether. Examples of biofuel include biogas, bioethanol, biodiesel, and bio jet.

As the oxidant, air, pure oxygen gas (may contain impurities that are rarely removed by a general removal method), and oxygen-enriched air are used.

The desulfurizing unit 2 desulfurizes the hydrogen-containing fuel supplied to the hydrogen generating unit 4. The desulfurizing unit 2 has a desulfurizing catalyst for removing sulfurated compounds contained in the hydrogen-containing fuel. As a desulfurization method of the desulfurizing unit 2, an adsorptive desulfurization method of adsorbing and removing sulfurated compounds and a hydrodesulfurization method of allowing sulfurated compounds to react with hydrogen to remove the sulfurated compounds are used, for example. The desulfurizing unit 2 supplies the desulfurized hydrogen-containing fuel to the hydrogen generating unit 4.

The vaporizing unit 3 generates steam supplied to the hydrogen generating unit 4 by heating and vaporizing water. When water is heated by the vaporizing unit 3, heat generated within the fuel cell system 1 such as heat of the hydrogen generating unit 4, heat of the off-gas combusting unit 6, or heat recovered from exhaust gas may be used. Moreover, water may be heated using additional heat sources such as a heater or a burner. Although only the heat supplied from the off-gas combusting unit 6 to the hydrogen generating unit 4 is illustrated as an example in Fig. 1, the present invention is not limited to this. The vaporizing unit 3 supplies the generated steam to the hydrogen generating unit 4.

The hydrogen generating unit 4 generates hydrogen-rich gas using the hydrogen-containing fuel from the desulfurizing unit 2. The hydrogen generating unit 4 has a reformer that reforms the hydrogen-containing fuel using a reforming catalyst. A reforming method used in the hydrogen generating unit 4 is not particularly limited, and for example, steam reforming, partial oxidation reforming, autothermal reforming, and other reforming methods can be used. The hydrogen generating unit 4 may include a configuration for adjusting properties in addition to the reformer that reforms the hydrogen-containing fuel using the reforming catalyst depending on the properties of the hydrogen-rich gas required for the cell stack 5. For example, when the type of the cell stack 5 is a polymer electrolyte fuel cell (PEFC) or a phosphoric acid fuel cell (PAFC), the hydrogen generating unit 4 includes a configuration (for example, a shift reactor and a selective oxidation reactor) for removing carbon monoxides in the hydrogen-rich gas. The hydrogen generating unit 4 supplies the hydrogen-rich gas to an anode 12 of the cell stack 5.

The cell stack 5 performs power generation using the hydrogen-rich gas from the hydrogen generating unit 4 and the oxidant from the oxidant supply unit 9. The cell stack 5 includes the anode 12 to which the hydrogen-rich gas is supplied, a cathode 13 to which the oxidant is supplied, and an electrolyte 14 disposed between the anode 12 and the cathode 13. The cell stack 5 supplies electric power to the outside via the power conditioner 10. The cell stack 5 supplies hydrogen-rich gas and oxidant that were not used for power generation to the off-gas combusting unit 6 as off-gas. A combusting unit (for example, a combustor or the like that heats the reformer) included in the hydrogen generating unit 4 may be used as the off-gas combusting unit 6.

The off-gas combusting unit 6 combusts the off-gas supplied from the cell stack 5. The heat generated by the off-gas combusting unit 6 is supplied to the hydrogen generating unit 4 and is used for generation of the hydrogen-rich gas in the hydrogen generating unit 4.

The hydrogen-containing fuel supply unit 7 supplies the hydrogen-containing fuel to the desulfurizing unit 2. The water supply unit 8 supplies water to the vaporizing unit 3. The oxidant supply unit 9 supplies the oxidant (cathode gas) to the cathode 13 of the cell stack 5. The hydrogen-containing fuel supply unit 7, the water supply unit 8, and the oxidant supply unit 9 are configured as a pump, for example, and are driven based on a control signal from the control unit 11.

The power conditioner 10 adjusts the electric power from the cell stack 5 according to a power consumption state on the outside. The power conditioner 10 performs a process of converting a voltage and a process of converting a DC power into an AC power, for example.

The control unit 11 performs a process of controlling the entire fuel cell system 1. The control unit 11 is configured as a device that includes a central processing unit (CPU), a read only memory (ROM), a random access memory (RAM), and an input/output interface. The control unit 11 is electrically connected to the hydrogen-containing fuel supply unit 7, the water supply unit 8, the oxidant supply unit 9, the power conditioner 10, and other sensors and auxiliary devices (not shown). The control unit 11 acquires various signals generated within the fuel cell system 1 and outputs a control signal to respective devices in the fuel cell system 1.

Next, the control executed by the control unit 11 will be described in further detail.

The control unit 11 is a portion that outputs a control signal to respective devices in the fuel cell system 1, and in addition to this, executes a diagnostic process of diagnosing a change in the output of the fuel cell system 1 resulting from a change in the properties (such as a calorific value or a composition) of hydrogen-containing fuel supplied from the hydrogen-containing fuel supply unit 7.

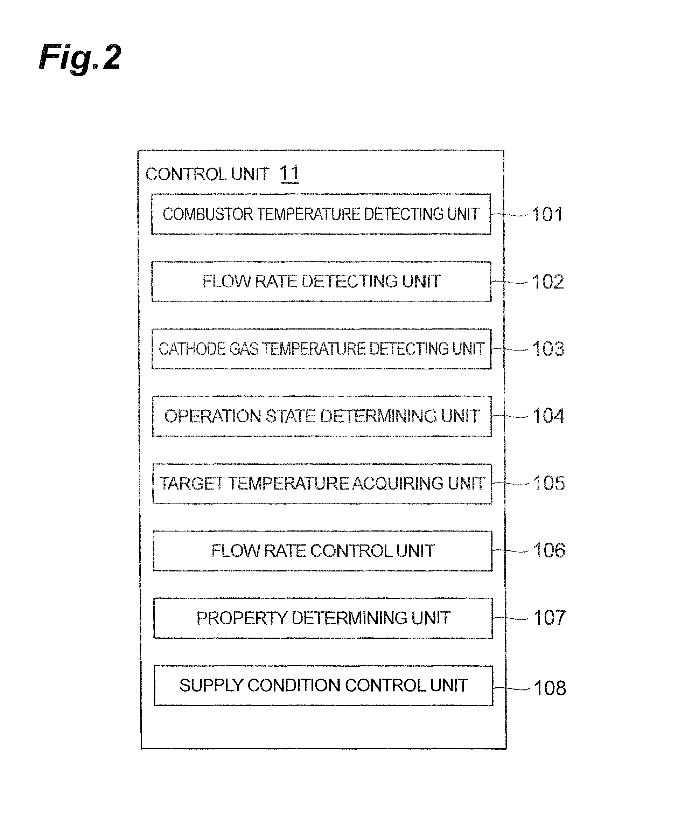

For this diagnostic process, as shown in Fig. 2, the control unit 11 includes, as its functional constituent components, a combustor temperature detecting unit 101, a flow rate detecting unit 102, a cathode gas temperature detecting unit 103, an operation state determining unit 104, a target temperature acquiring unit 105, a flow rate control unit 106, a property determining unit 107, and a supply condition control unit 108.

The combustor temperature detecting unit 101 is a portion that detects the temperature of the off-gas combusting unit 6. The combustor temperature detecting unit 101 constantly detects the temperature of the off-gas combusting unit 6 during the period when the fuel cell system 1 is generating power. Moreover, the flow rate detecting unit 102 detects the flow rate of cathode gas. The flow rate detecting unit 102 constantly detects the flow rate of the cathode gas supplied from the oxidant supply unit 9 to the cathode 13 of the cell stack 5 during the period when the fuel cell system 1 is generating power. Moreover, the cathode gas temperature detecting unit 103 is a portion that detects the temperature of the cathode gas. The cathode gas temperature detecting unit 103 constantly detects the temperature of the cathode gas supplied from the oxidant supply unit 9 to the cathode 13 of the cell stack 5 during the period when the fuel cell system 1 is generating power.

The operation state determining unit 104 is a portion that determines whether the fuel cell system 1 is in a constant output operation state such as a rated operation state. The constant output operation state is an operation state where the sweeping current of the cell stack 5 is constant and the electric power generated by the cell stack 5 is constant. The rated operation state which is one of constant output operation states is an operation state where the sweeping current of the cell stack 5 is constant at the maximum value in specification, and the electric power generated by the cell stack 5 is constant at the maximum power in specification. The operation state determining unit 104 determines that the fuel cell system 1 is in the constant output operation state when a change in a moving average of the voltages output from the cell stack 5 is equal to or smaller than a threshold value for a predetermined period (for example, 15 minutes), for example. When the operation state determining unit 104 determines that the fuel cell system 1 is in the constant output operation state, the operation state determining unit 104 outputs a signal for instructing the target temperature acquiring unit 105 to start its operation.

Moreover, the operation state determining unit 104 may include means for counting the time elapsed from the activation of the fuel cell system 1 as well as monitoring the voltage output from the cell stack 5. In this case, for example, when the counted time reaches a predetermined period in a state where the fuel cell system 1 is not in the constant output operation state, the fuel cell system 1 enters into a forced idling state (a 0W output state where power generation is not performed but fuel is supplied) and outputs a signal for instructing the target temperature acquiring unit 105 to start its operation.

The target temperature acquiring unit 105 is a portion that acquires a target temperature of the off-gas combusting unit 6 in relation to the flow rate of the cathode gas. More specifically, when the operation state determining unit 104 determines that the fuel cell system 1 is in the constant output operation state, the target temperature acquiring unit 105 acquires the present flow rate of the cathode gas detected by the flow rate detecting unit 102 and the present temperature of the cathode gas detected by the cathode gas temperature detecting unit 103.

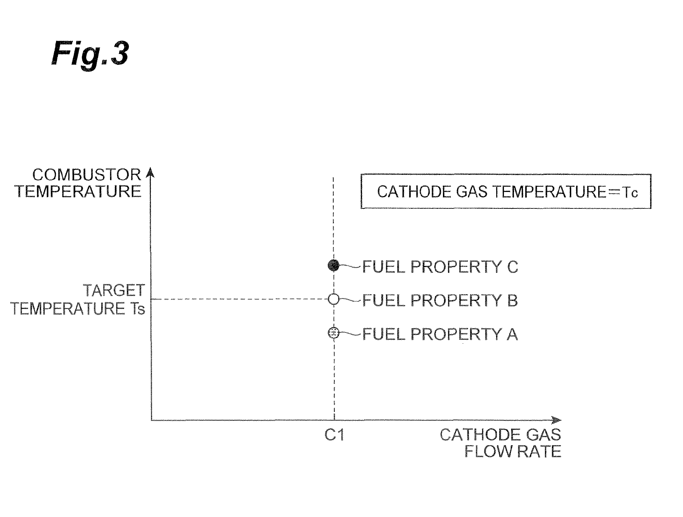

Fig. 3 is a diagram showing how the target temperature acquiring unit 105 acquires the target temperature. As shown in Fig. 3, the target temperature acquiring unit 105 stores, in advance, the target temperature of the off-gas combusting unit 6 for the flow rate and temperature of the cathode gas with respect to each property of the fuel when the fuel cell system 1 is in the constant output operation state. The example of Fig. 3 shows a case where the present temperature of the cathode gas detected by the cathode gas temperature detecting unit 103 is Tc. When the fuel property set for the operation of the fuel cell system 1 is B (calorific value: medium), and the present flow rate of the cathode gas detected by the flow rate detecting unit 102 is C1, the target temperature of the off-gas combusting unit 6 is determined to be Ts. The target temperature of the off-gas combusting unit 6 for the flow rate and temperature of the cathode gas as shown in Fig. 3 is preferably stored with respect to each power generation amount in the constant output operation state.

The flow rate control unit 106 is a portion that controls the flow rate of the cathode gas. More specifically, the flow rate control unit 106 monitors the temperature detected by the combustor temperature detecting unit 101 and changes the flow rate of the cathode gas so that the temperature of the off-gas combusting unit 6 reaches the target temperature.

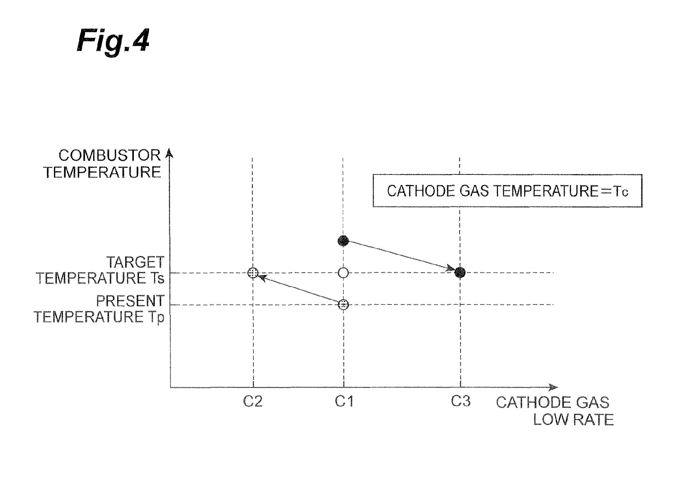

Fig. 4 is a diagram showing how the flow rate control unit 106 controls the cathode gas. When there is no change in the fuel property and the fuel property is set to B (calorific value: medium), the target temperature Ts is identical to the present temperature Tp detected by the combustor temperature detecting unit 101. However, if the fuel property changes from B to A (calorific value: low), the present temperature Tp detected by the combustor temperature detecting unit 101 is smaller than the target temperature Ts. In this case, the flow rate control unit 106 decreases the flow rate of the cathode gas from C1 to C2 so that the present temperature Tp is identical to the target temperature Ts.

On the other hand, if the fuel property changes from B to C (calorific value: high), the present temperature Tp detected by the combustor temperature detecting unit 101 is larger than the target temperature Ts. In this case, the flow rate control unit 106 increases the flow rate of the cathode gas from C1 to C3 so that the present temperature Tp is identical to the target temperature Ts.

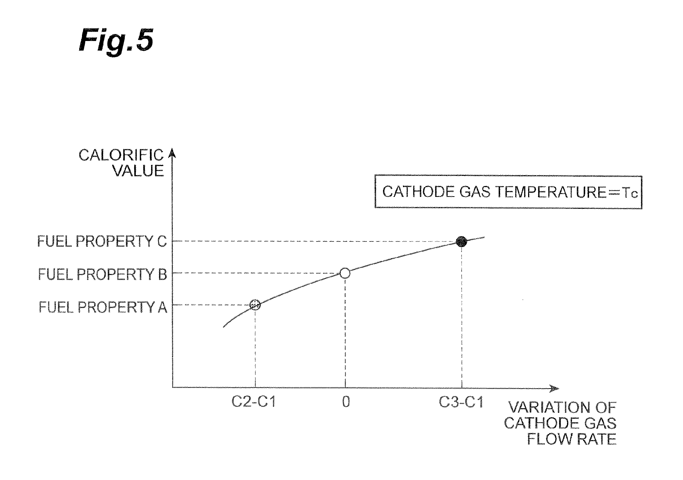

The property determining unit 107 is a portion that determines the fuel property based on a variation of the flow rate of the cathode gas changed by the flow rate control unit 106 and the present temperature of the cathode gas detected by the cathode gas temperature detecting unit 103. Fig. 5 is a diagram showing how the property determining unit 107 determines the fuel property. As shown in Fig. 5, the target temperature acquiring unit 105 stores, in advance, a property table in which a variation of the flow rate of the cathode gas, for example, when the temperature is Tc is associated for each fuel property. In the example shown in Fig. 5, the property determining unit 107 determines that there is no change in the fuel property when the variation ΔC of the flow rate of the cathode gas is 0 and determines that the fuel property has changed from B to A when the variation ΔC of the flow rate of the cathode gas is C2-C 1. Moreover, the property determining unit 107 determines that the fuel property has changed from B to C when the variation ΔC of the flow rate of the cathode gas is C3-C 1.

The supply condition control unit 108 is a portion that adjusts the supply conditions for fuel and water based on the determination results of the property determining unit 107. When the property determining unit 107 determines that the fuel property has changed, the supply condition control unit 108 adjusts the flow rate of the fuel supplied from the hydrogen-containing fuel supply unit 7 or the flow rate of the water supplied from the water supply unit 8 so that the fuel utilization rate or a S/C (steam/carbon) ratio has an optimum value according to the changed property.

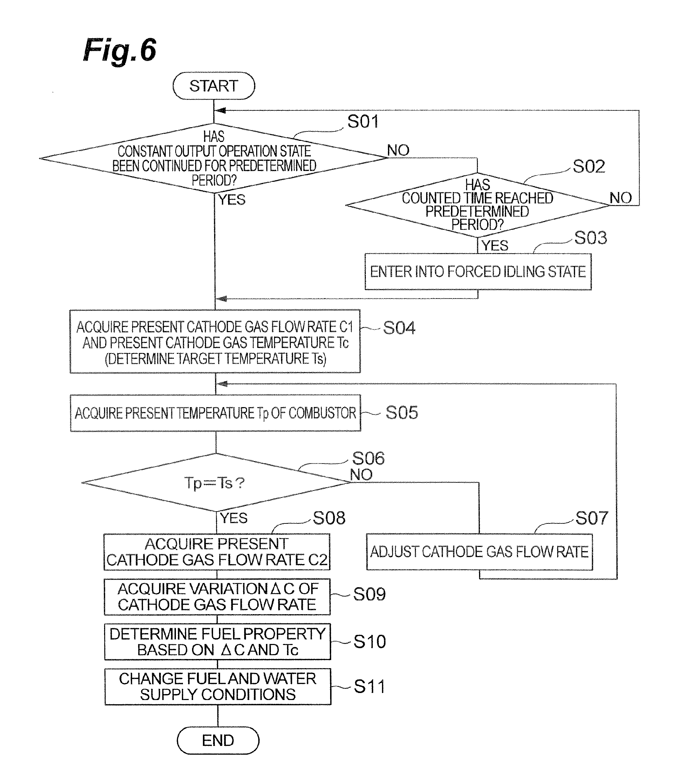

Next, the operation of the control unit 11 will be described. Fig. 6 is a flowchart showing an example of the diagnostic process of the control unit.

First, when the fuel cell system 1 starts power generation, counting of the time elapsed from the start of the power generation starts. Moreover, the combustor temperature detecting unit 101 starts detecting the temperature of the off-gas combusting unit 6, the flow rate detecting unit 102 starts detecting the flow rate of the cathode gas, and the cathode gas temperature detecting unit 103 starts detecting the temperature of the cathode gas. Subsequently, it is determined whether the constant output operation state of the fuel cell system 1 has continued for a predetermined period (step S01).

When the constant output operation state has not continued for the predetermined period, it is determined whether the counted time has reached a predetermined period (step S02). If the counted time has not reached the predetermined period, the flow returns to step S01, and it is determined again whether the constant output operation state has continued. Moreover, when the counted time has reached the predetermined period, the fuel cell system 1 enters into a forced idling state (step S03).

When it is determined in step S01 that the constant output operation state has continued for the predetermined period, or when it is determined in step S03 that the fuel cell system 1 has entered into the forced idling state, the diagnostic process starts. In the diagnostic process, first, the present flow rate of the cathode gas and the present temperature of the cathode gas are acquired (step S04), and the target temperature of the off-gas combusting unit 6 is determined based on the power generation amount in the constant output operation state and the acquired flow rate and temperature of the cathode gas. Subsequently, the present temperature of the off-gas combusting unit 6 is acquired (step S05).

After the present temperature of the off-gas combusting unit 6 is acquired, it is determined whether the target temperature is identical to the present temperature (step S06). If the target temperature is not identical to the present temperature, the flow rate of the cathode gas is adjusted until both are identical (step S07). When the target temperature is identical to the present temperature, the flow rate of the cathode gas at that point in time is acquired (step S08).

Subsequently, a variation of the flow rate of the cathode gas is acquired based on a difference between the flow rate of the cathode gas acquired in step S04 and the flow rate of the cathode gas acquired in step S08 (step S09). Subsequently, the fuel property is determined based on the variation of the flow rate of the cathode gas and the temperature of the cathode gas (step S 10), and the supply conditions for fuel and water are changed based on the determination results (step S11). That is, the flow rate of the fuel supplied from the hydrogen-containing fuel supply unit 7 or the flow rate of water supplied from the water supply unit 8 is changed so that the fuel utilization rate or the S/C ratio has an optimum value. When the fuel cell system 1 goes out of the constant output operation state during execution of the diagnostic process, it is preferable that the flow returns to step S01 without resetting the counter and the subsequent processes are executed again.

As described above, the fuel cell system 1 monitors the temperature of the off-gas combusting unit 6 detected by the combustor temperature detecting unit 101 in the constant output operation state such as a rated operation state, rather than directly measuring the fuel property, and controls the flow rate of the cathode gas so that the temperature of the off-gas combusting unit 6 reaches the target temperature. Moreover, the fuel property is determined based on the variation of the flow rate of the cathode gas changed until the temperature of the off-gas combusting unit 6 reaches the target temperature and the temperature of the cathode gas. Thus, it is possible to simplify the configuration required for determining whether the fuel property has changed or not as compared to a conventional method of measuring a plurality of factors of the fuel property.

Moreover, the change in the temperature of the off-gas combusting unit 6 tends to quickly follow the change in the fuel property. Thus, execution of the diagnostic process enables the change in the fuel property to be quickly detected.

Further, in the present embodiment, even if the fuel cell system 1 does not enter into the constant output operation state, when the time counted from the start of power generation reaches a predetermined period, the fuel cell system 1 enters into a forced idling state to execute the diagnostic process. In this manner, it is possible to periodically diagnose the fuel property regardless of the operation state of the fuel cell system 1.

The present invention is not limited to the above-described embodiment. For example, in the above embodiment, although the combustor temperature detecting unit 101 detects the temperature of the off-gas combusting unit 6, a generator temperature detecting unit may detect the temperature of a power generator that includes the hydrogen generating unit 4, the cell stack 5, and the off-gas combusting unit 6, and a cell stack temperature detecting unit may detect the temperature of the cell stack 5 only. In this case, the same advantages as the above embodiment can be obtained. Moreover, since the temperature is easily stabilized, it is possible to suppress a detection error.

### Reference Signs List

- 1:: fuel cell system
- 4:: hydrogen generating unit
- 5:: cell stack
- 6:: off-gas combusting unit
- 9:: oxidant supply unit
- 101:: combustor temperature detecting unit
- 102:: flow rate detecting unit
- 103:: combustor temperature detecting unit
- 104:: operation state determining unit
- 105:: target temperature acquiring unit
- 106:: flow rate control unit
- 107:: property determining unit
- 108:: supply condition control unit

## Claims

1. A fuel cell system comprising:
a hydrogen generating unit that generates hydrogen-containing gas using hydrogen-containing fuel;
a cell stack that performs power generation using the hydrogen-containing gas;
a supply unit that supplies cathode gas to the cell stack;
a combustor that combusts off-gas supplied from the cell stack;
a combustor temperature detecting unit that detects a temperature of the combustor;
a flow rate detecting unit that detects a flow rate of the cathode gas;
a cathode gas temperature detecting unit that detects a temperature of the cathode gas;
an operation state determining unit that determines whether the fuel cell system is in a constant output operation state;
a target temperature acquiring unit that acquires a target temperature of the combustor for the flow rate of the cathode gas detected by the flow rate detecting unit and the temperature of the cathode gas detected by the cathode gas temperature detecting unit, when the operation state determining unit determines that the fuel cell system is in the constant output operation state;
a flow rate control unit that monitors the temperature detected by the combustor temperature detecting unit and controls the flow rate of the cathode gas so that the temperature of the combustor reaches the target temperature; and
a property determining unit that determines a property of the fuel based on a variation of the flow rate of the cathode gas changed by the flow rate control unit and the temperature of the cathode gas.

2. A fuel cell system comprising:
a hydrogen generating unit that generates hydrogen-containing gas using hydrogen-containing fuel;
a cell stack that performs power generation using the hydrogen-containing gas;
a supply unit that supplies cathode gas to the cell stack;
a combustor that combusts off-gas supplied from the cell stack;
a generator temperature detecting unit that detects a temperature of a generator that includes the hydrogen generating unit, the cell stack, and the combustor;
a flow rate detecting unit that detects a flow rate of the cathode gas;
a cathode gas temperature detecting unit that detects a temperature of the cathode gas;
an operation state determining unit that determines whether the fuel cell system is in a constant output operation state;
a target temperature acquiring unit that acquires a target temperature of the generator for the flow rate of the cathode gas detected by the flow rate detecting unit and the temperature of the cathode gas detected by the cathode gas temperature detecting unit, when the operation state determining unit determines that the fuel cell system is in the constant output operation state;
a flow rate control unit that monitors the temperature detected by the generator temperature detecting unit and controls the flow rate of the cathode gas so that the temperature of the generator reaches the target temperature; and
a property determining unit that determines a property of the fuel based on a variation of the flow rate of the cathode gas changed by the flow rate control unit and the temperature of the cathode gas.

3. A fuel cell system comprising:
a hydrogen generating unit that generates hydrogen-containing gas using hydrogen-containing fuel;
a cell stack that performs power generation using the hydrogen-containing gas;
a supply unit that supplies cathode gas to the cell stack;
a combustor that combusts off-gas supplied from the cell stack;
a cell stack temperature detecting unit that detects a temperature of the cell stack;
a flow rate detecting unit that detects a flow rate of the cathode gas;
a cathode gas temperature detecting unit that detects a temperature of the cathode gas;
an operation state determining unit that determines whether the fuel cell system is in a constant output operation state;
a target temperature acquiring unit that acquires a target temperature of the cell stack for the flow rate of the cathode gas detected by the flow rate detecting unit, when the operation state determining unit determines that the fuel cell system is in the constant output operation state;
a flow rate control unit that monitors the temperature detected by the cell stack temperature detecting unit and controls the flow rate of the cathode gas so that the temperature of the cell stack reaches the target temperature; and
a property determining unit that determines a property of the fuel based on a variation of the flow rate of the cathode gas changed by the flow rate control unit and the temperature of the cathode gas.
